(19) Europäisches Patentamt
European Patent Office
Office européen des brevets

(11) EP 2 362 236 A1

(12) **EUROPEAN PATENT APPLICATION**

(43) Date of publication:
**31.08.2011 Bulletin 2011/35**

(51) Int Cl.:
***G01S 3/04*** *(2006.01)*      ***G01S 3/48*** *(2006.01)*

(21) Application number: **11154687.5**

(22) Date of filing: **16.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.02.2010 KR 20100014550**

(71) Applicant: **SAMSUNG ELECTRONICS CO., LTD.**
**Suwon-si**
**Gyeonggi-do 442-742 (KR)**

(72) Inventors:
- **Kang, Joon Seong**
  **138-844, Seoul (KR)**
- **Kim, Eung Sun**
  **443-744, Gyeonggi-do (KR)**
- **Park, Do Hyung**
  **136-831, Seoul (KR)**

(74) Representative: **Land, Addick Adrianus Gosling et al**
**Arnold & Siedsma**
**Sweelinckplein 1**
**2517 GK The Hague (NL)**

(54) **Method and apparatus for estimating angle of arrival**

(57) Provided is a method of an angle of arrival (AoA) estimating apparatus. The AoA estimating apparatus may obtain at least two candidate values for an AoA of a received signal, based on a first steering vector. The AoA estimating apparatus may further detect a second steering vector corresponding to a predetermined rotation angle to which the AoA estimating apparatus rotates, and may determine the AoA based on one of the at least two candidate values, with respect to the second steering vector and the predetermined rotation angle.

EP 2 362 236 A1

**Description**

This application claims the benefit under 35 U.S.C. § 119(a) of Korean Patent Application No. 10-2010-0014550, filed on February 18, 2010, in the Korean Intellectual Property Office, the entire disclosure of which is incorporated herein by reference for all purposes.

The following description relates to a method and apparatus for estimating an incidence angle or an angle of arrival (AoA) using a multi-antenna, and more particularly, to a method and apparatus for overcoming an ambiguity problem and accurately estimating an AoA.

Localization technologies to estimate a location of a user are used to provide a location based service (LBS). The localization technologies may be classified, based on a scheme of estimating the location, as a triangulation scheme, a proximity scheme, or a finger-print scheme, and may be classified, based on a used medium, as a scheme using a base station of a cellular system, a scheme using a global positioning system (GPS) satellite system, or a scheme using a wireless local area network (WLAN) system.

The triangulation may be classified as a distance-based scheme or an angle-based scheme. The distance-based scheme may calculate a location of a reception point using factors such as a time of arrival (TOA), a time difference of arrival (TDOA), and the like, of signals transmitted from at least three reference points. The angle-based scheme may calculate a location of a reception point using an AoA or an incidence angle of signals transmitted from at least two reference points.

A method of estimating the AoA or the incidence angle may be classified as a method using a directional antenna or a method using an array antenna. The method using the directional antenna performs scanning of an incidence angle or an AoA of a received signal, while sequentially rotating a fixed directional emission pattern. The method of using the array antenna estimates an incidence angle or an AoA based on a received signal in each of antenna elements included in the array antenna.

In one general aspect, there is provided an angle of arrival (AoA) estimating method of an AoA estimating apparatus, the method including calculating a first steering vector with respect to a received signal, the first steering vector indicating phase differences in antenna elements included in an array antenna, determining at least two candidate values with respect to an AoA of the received signal, based on the first steering vector, calculating a second steering vector corresponding to a predetermined rotation angle to which the AoA estimating apparatus rotates, selecting one of the at least two candidate values based, on the second steering vector and the predetermined rotation angle, and determining the AoA based on the selected candidate value.

The determining of the AoA may include determining the AoA based on a memory storing, in advance, information associated with candidate vectors for the second steering vector.

The information associated with the candidate vectors for the second steering vector may include information corresponding to the predetermined rotation angle with respect to each of the at least two candidate values of the AoA.

The method may further include measuring a rotation angle of the AoA estimating apparatus.

The determining of the AoA may include selecting a candidate vector from among the candidate vectors for the second steering vector, based on a comparison of the candidate vectors for the second steering vector to the second steering vector, and estimating the AoA based on the slected candidate vector.

The array antenna may be an omni-directional antenna. or

Intervals among the antenna elements may be greater than or equal to one-half of a wavelength.

In another general aspect, there is provided an AoA estimating method of an AoA estimating apparatus, the method including calculating a first steering vector with respect to a signal received from a target apparatus, the first steering vector indicating phase differences in antenna elements included in an array antenna, determining at least two candidate values with respect to an AoA of the received signal, based on the first steering vector, receiving, from the target apparatus, information associated with a second steering vector, when an angle between a direction of the target apparatus and a direction of the AoA estimating apparatus is a predetermined rotation angle, selecting one of the at least two candidate values based on the predetermined rotation angle of the target apparatus and information associated with the second steering vector, and determining the AoA based on the selected candidate value.

The determining of the AoA may include determining the AoA based on a duality between rotation of the target apparatus and rotation of the AoA estimating apparatus.

The determining of the AoAmay include determining a virtual rotation angle of the AoA estimating apparatus, the virtual rotation angle corresponding to the predetermined rotation angle, selecting a candidate from among candidate vectors for the second steering vector, the second steering vector corresponding to the virtual rotation angle to which the AoA estimating apparatus virtually rotates, and estimating the AoA based on the selected candidate vector.

The candidate vectors for the second steering vector may be stored in a memory in advance.

In another general aspect, there is provided an AoA estimating apparatus, the apparatus including a phase difference calculator to calculate a first steering vector from a target apparatus to the AoA estimating apparatus, to calculate phase differences in antenna elements included in an array antenna with respect to a received signal, and to calculate a second steering vector corresponding to a first rotation angle to which the AoA estimating apparatus rotates, a candidate value obtaining unit to determine at least two candidate values with respect to an AoA of the received signal, based on the first steering vector, and an AoA determining unit to select one of the at least two candidate values based on the second steering vector and the first rotation angle, and to determine the AoA based on the selected candidate value.

The apparatus may further include a sensor to measure a rotation angle of the AoA estimating apparatus.

The apparatus may further include an information receiving unit to receive, from the target apparatus, information associated with a third steering vector from the AoA estimating apparatus to the target apparatus, when an angle between a direction of the AoA estimating apparatus and a direction of the target apparatus is a second rotation angle, and the AoA determining unit may select the one of the at least two candidate values further based on the second rotation angle and information associated with the third steering vector.

According to one example, a second steering vector may be detected, in response to rotation of an AoA estimating apparatus, and an AoA may be estimated based on the second steering vector. Accordingly, an ambiguity problem may be mitigated.

According to another example, the AoA may be estimated based on the second steering vector, even if an ambiguity problem does not occur.

Certain example may effectively overcome ambiguity problems based on rotation of a target apparatus, even if the AoA estimating apparatus does not rotate.

A non-transitory computer readable recording medium may store a program to implement a method of AoA estimation.

Other features and aspects may be apparent from the following detailed description, the drawings, and the claims.

## BRIEF DESCRIPTION OF THE DRAWINGS

FIG. 1 is a diagram illustrating phase differences in antenna elements in an array antenna, with respect to a received signal.

FIG. 2 is a diagram illustrating beam patterns of a received signal when an incidence angle of the received signal with respect to a uniform linear array antenna system is 0˚, 90˚, 180˚, or 270˚, the uniform linear array antenna system having intervals of one wavelength among antenna elements.

FIG. 3 is a diagram illustrating beam patterns of a received signal when an incidence angle and a rotation angle of the received signal with respect to a uniform linear array antenna system are 0˚ and 20˚, respectively, and beam patterns of a received signal when the incidence angle and the rotation angle of the received signal with respect to the uniform linear array antenna system are 90˚ and 20˚, respectively, the uniform linear array antenna system having intervals of one wavelength among antenna elements.

FIG. 4 is a diagram illustrating beam patterns of a received signal when an incidence angle and a rotation angle of the received signal with respect to a uniform linear array antenna system are 180˚ and 20˚, respectively, and beam patterns of a received signal when the incidence angle and the rotation angle of the received signal with respect to the uniform linear array antenna system are 270˚ and 20˚, respectively, the uniform linear array antenna system having an interval of one wavelength between antenna elements.

FIG. 5 is a flowchart illustrating an example of a method of an AoA estimating apparatus.

FIG. 6 is a diagram illustrating a relationship between an AoA estimating apparatus and a target apparatus while the target apparatus rotates.

FIG. 7 is a flowchart illustrating another example of a method of an AoA estimating apparatus.

FIG. 8 is a block diagram illustrating an example of an AoA estimating apparatus.

Throughout the drawings and the detailed description, unless otherwise described, the same drawing reference numerals should be understood to refer to the same elements, features, and structures. The relative size and depiction of these elements may be exaggerated for clarity, illustration, and convenience.

## DETAILED DESCRIPTION

The following detailed description is provided to assist the reader in gaining a comprehensive understanding of the methods, apparatuses and/or systems described herein. Accordingly, various changes, modifications, and equivalents of the systems, apparatuses and/or methods described herein may be suggested to those of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of well-known functions and constructions may be omitted for increased clarity and conciseness.

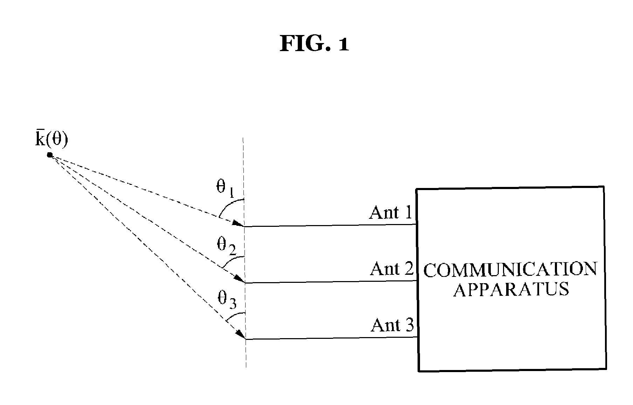

FIG. 1 illustrates phase differences in antenna elements in an array antenna, with respect to a received signal.

Referring to FIG. 1, an array antenna installed in a communication apparatus may include three antenna elements Ant 1, Ant 2, and Ant$_3$. While three antennas are illustrated in FIG. 1, it should be understood that the antenna array may include any number of antenna elements.

In this example, when a plane wave having a wave vector of $\overline{k}$ ($\theta$) is projected onto an array antenna at an incidence angle $\theta$, antenna elements with respect to a received signal may have phase differences according to locations of the antenna elements. In general, a first steering vector $\overline{a}(\theta)$ is used to estimate the incidence angle $\theta$ or an AoA, and the first steering vector $\overline{a}(\theta)$ may be determined according to the phase differences among the antennal elements, as expressed by Equation 1,

[Equation 1]

$$\overline{a}(\theta) = \left[ e^{-j\overline{k}(\theta)\cdot\overline{r_1}} \quad e^{-j\overline{k}(\theta)\cdot\overline{r_2}} \quad \cdots \quad e^{-j\overline{k}(\theta)\cdot\overline{r_N}} \right]$$

In Equation 1, $\overline{y}_m$ denotes a vector indicating a location of an $m^{th}$ antenna element, and N denotes a number of antenna elements.

To estimate the incidence angle $\theta$, the array antenna may be designed to distinguish steering vectors respectively corresponding to different incidence angles from each other. When incidence angles $\theta_1$ and $\theta_2$ differ in value, the array antenna may be designed to distinguish a steering vector $\overline{a}(\theta_1)$, corresponding to $\theta_1$, and a steering vector $\overline{a}(\theta_2)$, corresponding to $\theta_2$, from each other.

However, if the array antenna is not deliberately designed, the steering vector generated with respect to the incidence vector $\theta_1$ may be the same as the steering vector generated with respect to $\theta_2$; this circumstance may be referred to as an ambiguity problem of an incidence angle. When an ambiguity problem occurs, a number of candidates for the incidence angle may exist. Accordingly, it may be difficult to estimate, as a real incidence angle, one candidate from among the number of candidates.

In a uniform linear array antenna, intervals among antenna elements have substantially the same antenna spacing d, and the first steering vector may be expressed by Equation 2,

[Equation 2]

$$\overline{a} = \left[ 1 \quad e^{-j\frac{2\pi}{\lambda}d\cos\theta} \quad \cdots \quad e^{-j\frac{2\pi}{\lambda}d(N-1)\cos\theta} \right].$$

In Equation 2, $\lambda$ denotes wavelength.

In this example, the uniform linear array antenna may also have an ambiguity problem, and the ambiguity problem may be expressed by Equation 3,

[Equation 3]

$$\frac{2\pi}{\lambda} d \cos\theta_1 = \frac{2\pi}{\lambda} d \cos\theta_2 + 2n\pi : \text{Ambiguity}$$

$\theta$ : Incident Angle ($\theta_1 \neq \theta_2$, $\theta_1$, $\theta_2 \in$ [-180,180])
d : Antenna Spacing
n : n $\in$ {10,$\pm$1,$\pm$21 ...}]

When an incidence angle is estimated in the uniform linear array antenna, a steering vector generated with respect to an angle $+\theta$ may be the same as a steering vector generated with respect to an angle $-\theta$. That is, signals that are projected respectively into a front and a rear at the same angle $\pm\theta$, the front and the rear being determined according to the direction where the antenna elements are arranged in parallel, may have the same steering vector. Accordingly, $\overline{a}(+\theta)=\overline{a}(-0)$ . Also, if the intervals of d among the antenna elements are greater than or equal to one-half wavelength, an ambiguity problem may occur since the same steering vector may be generated with respect to two different angles.

Therefore, to mitigate ambiguity problems, the intervals among the antenna elements may be maintained to be less than or equal to one-half wavelength, or a directional antenna may be used. When the array antenna is used, the intervals among the antenna elements may be maintained to be greater than or equal to one-half wavelength. Further, an omni-directional antenna may be used, as opposed to the directional antenna, to increase efficiency using spatial diversity and the like.

Although an omni-directional antenna may be used and intervals among the antenna elements may be maintained to be greater than or equal to one wavelength, there is a desire for a method of overcoming the ambiguity problem. As an example, when the same steering vector is generated with respect to different incidence angles, a target apparatus or an AoA estimating apparatus may rotate to a predetermined rotation angle to determine a second steering vector, and may use the second steering vector to more accurately estimate a desired incidence angle while mitigating ambiguity problems.

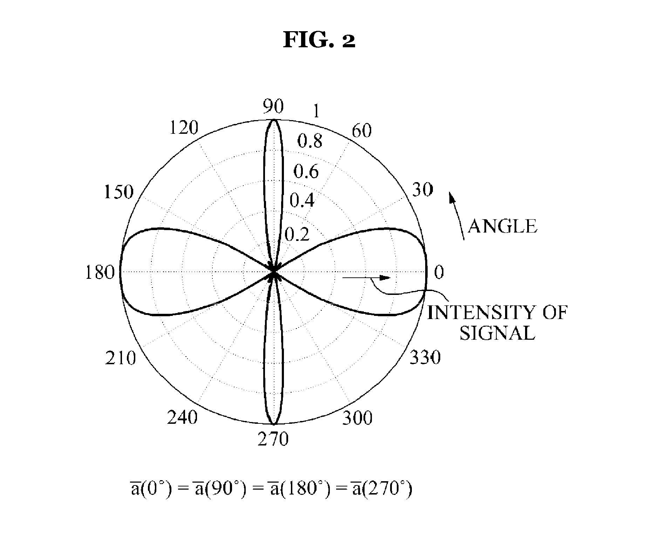

FIG. 2 illustrates beam patterns of a received signal when an incidence angle of the received signal with respect to a uniform linear array antenna system is 0˚, 90˚, 180˚, or 270˚, the uniform linear array antenna system having intervals of one wavelength among antenna elements.

Referring to FIG. 2, when the incidence angles of the received signals are 0˚, 90˚, 180˚, or 270˚, the same beam pattern may be generated. Although there are four different incidence angles, a single beam pattern is generated, which may indicate that steering vectors with respect to four different incidence angles are the same.

The incidence angles obtained from a single steering vector corresponding to the beam pattern of FIG. 2 may be 0˚, 90˚, 180˚, or 270˚ and thus, the AoA estimating apparatus may not be able to determine an incidence angle of the received signal. According to examples described herein, the AoA estimating apparatus may rotate at a predetermined rotation angle $\Delta\theta$, and may determine a second steering vector. Based on the second steering vector, the AoA estimating apparatus may determine an original incidence angle from among 0˚, 90˚, 180˚, and 270˚.

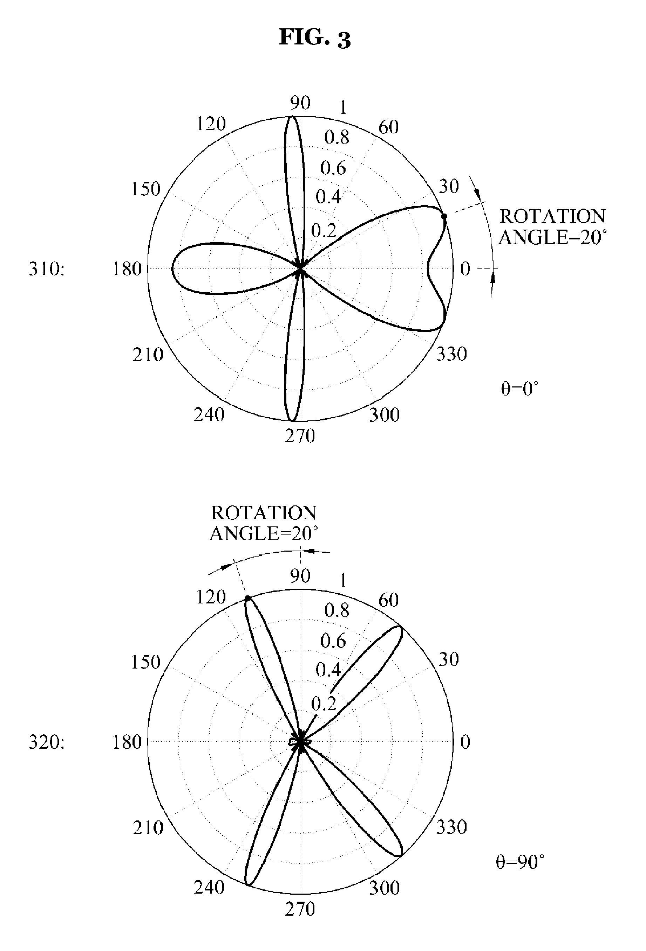

FIG. 3 illustrates beam patterns of a received signal when an incidence angle and a rotation angle of the received signal with respect to a uniform linear array antenna system are 0˚ and 20˚, respectively, and beam patterns of a received signal when the incidence angle and the rotation angle of the received signal with respect to the uniform linear array antenna system are 90˚ and 20˚, respectively, the uniform linear array antenna system having intervals of one wavelength among antenna elements.

Referring to FIGS. 2 and 3, when the incidence angle of the received signal is 0˚ and the AoA estimating apparatus rotates to 20˚, the beam pattern of FIG. 2 may change to a beam pattern 310 of FIG. 3. When the incidence angle of the received signal is 90˚ and the AoA estimating apparatus rotates to 20˚, the beam pattern of FIG. 2 may change to a beam pattern 320 of FIG. 3.

Referring to a beam pattern or the second steering vector shown after the AoA estimating apparatus rotates to 20˚, whether the original incidence angle is 0˚ or 90˚ may be determined. When the beam pattern or the second steering vector shown after the AoA estimating apparatus rotates to 20˚ is similar to the beam pattern 310 of FIG. 3, the original incidence angle may be estimated as about 0˚, and when the beam pattern or the second steering vector is similar to the beam pattern 320 of FIG. 3, the original incidence angle may be estimated as about 90˚.

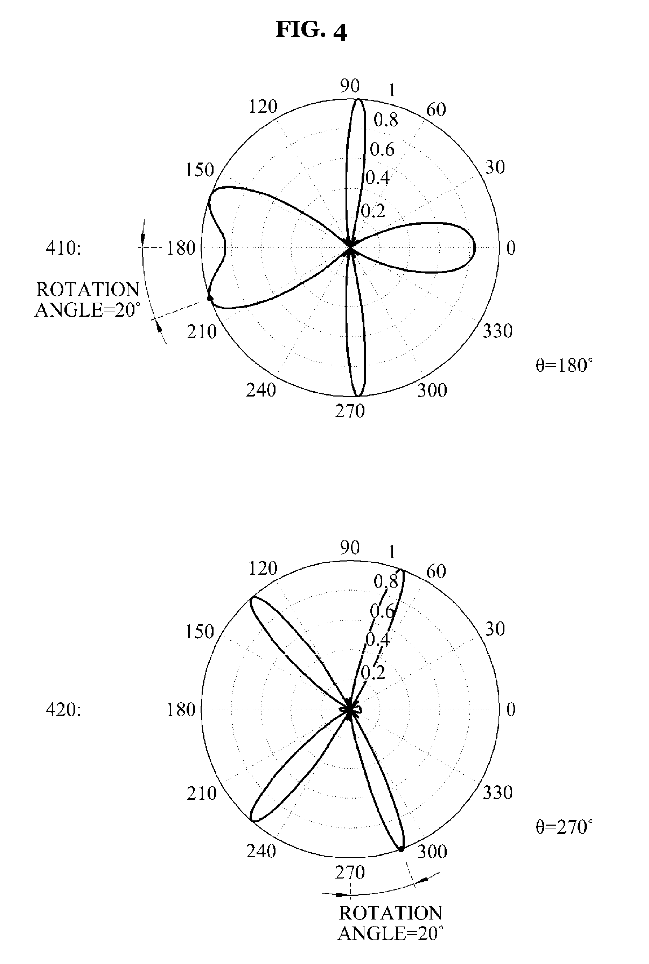

FIG. 4 illustrates beam patterns of a received signal when an incidence angle and a rotation angle of the received signal with respect to a uniform linear array antenna system are 180˚ and 20˚, respectively, and beam patterns of a received signal when the incidence angle and the rotation angle of the received signal with respect to the uniform linear array antenna system are 270° and 20°, respectively, the uniform linear array antenna system having intervals of one wavelength among antenna elements.

Referring to FIGS. 2 and 4, when the incidence of the received signal is 180° and the AoA estimating apparatus rotates to 20°, the beam pattern of FIG. 2 may change to a beam pattern 410 of FIG. 4. When the incidence angle of the received signal is 270° and the AoA estimating apparatus rotates to 20°, the beam pattern of FIG. 2 may change to a beam pattern 420 of FIG. 4.

Referring to the beam pattern or the second steering vector showing after the AoA estimating apparatus rotates to 20°, whether the original incidence angle is 1800 or 270° may be determined. When the beam pattern or the second steering vector showing after the AoA estimating apparatus rotates to 20° is similar to the beam pattern 410 of FIG. 4, the original incidence angle may be estimated as about 180°, and when the beam pattern or the second steering vector is similar to the beam pattern 420 of FIG. 4, the original incidence angle may be estimated as about 270.

Candidates for both the beam pattern and the second steering vector showing after the AoA estimating apparatus rotates to a predetermined angle may be stored in a memory in advance. The memory may be included in the AoA estimating apparatus. The original incidence angle may be determined by comparing a candidate similar to the real beam pattern or the real second steering vector, from among the candidates.

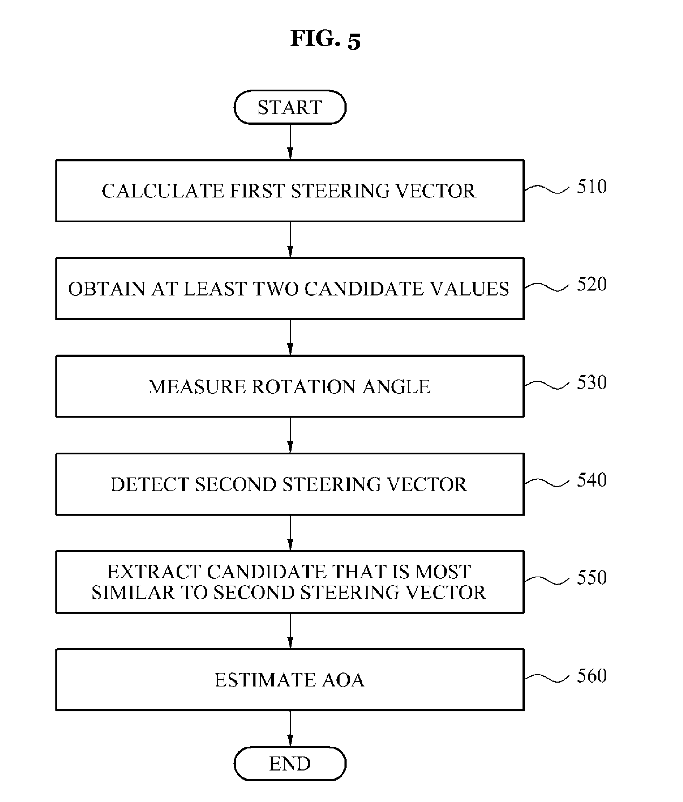

FIG. 5 illustrates an example of a method of an AoA estimating apparatus.

Referring to FIG. 5, the AoA estimating apparatus calculates phase differences in antenna elements with respect to a received signal using an array antenna, and calculates a first steering vector in operation 510.

There may be multiple candidate values for an incidence angle corresponding to the first steering vector due to an ambiguity problem, and the AoA estimating apparatus may obtain the candidate values in operation 520.

The AoA estimating apparatus measures a rotation angle of the AoA estimating apparatus using a previously installed sensor or similar device, for example, a magnetometer, in operation 530.

The AoA estimating apparatus detects a second steering vector corresponding to the measured rotation angle in operation 540.

The AoA estimating apparatus compares candidate vectors to the second steering vector and extracts a candidate vector that is most similar to the second steering vector from among candidate vectors for the second steering vector in operation 550.

In this example, the candidate vectors for the second steering vector with respect to the measured rotation angle may be stored in a memory in advance. The memory may be included in the AoA estimating apparatus.

The AoA estimating apparatus estimates an AoA based on the extracted candidate vector in operation 560.

For example, if the extracted candidate vector corresponds to an AoA of 50°, the AoA may be estimated as 50°.

However, an AoA estimating apparatus may not always be capable of rotating, or may be subject to design constraints such that rotation is not desirable. For example, if the AoA estimating apparatus is installed in a fixed access point (AP) of a wireless local area network (WLAN), there may be difficulties in rotating the AoA estimating apparatus. In this example, the AoA may be estimated by utilizing a rotation angle of a target apparatus corresponding to a direction of the target apparatus, that is, a direction of an apparatus transmitting a signal, as opposed to by rotating the AoA estimating apparatus. Utilizing the rotation angle is described below.

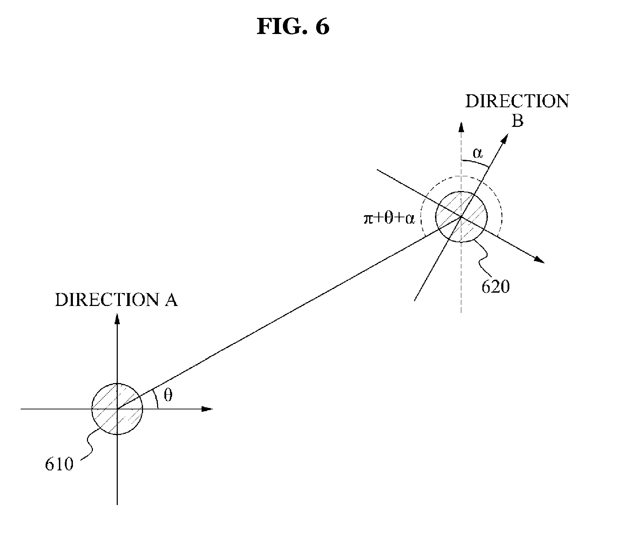

FIG. 6 illustrates a relationship between an AoA estimating apparatus and a target apparatus while the target apparatus rotates.

Referring to FIG. 6, a signal is projected at an incidence angle $\theta$ from the target apparatus to the AoA estimating apparatus. A direction B the target apparatus is heading toward rotates at a rotation angle $\alpha$ from a direction A the AoA estimating apparatus is heading toward. An angle between a direction of the target apparatus and a direction of the AoA estimating apparatus may be expressed as the rotation angle $\alpha$.

In this example, an incidence angle, estimated by the target apparatus with respect to a signal received from the AoA estimating apparatus may be $\pi+\theta+\pi$ due to a duality. A case where the target apparatus estimates the incidence angle with respect to the signal from the AoA estimating apparatus similar to a case where the AoA estimating apparatus estimates the incidence angle with respect to the signal from the target apparatus, after rotating by $\pi+\alpha$.

Therefore, the target apparatus and the AoA estimating apparatus may exchange information with each other, and may mitigate ambiguity problems by estimating an incidence angle with respect to a signal from the target apparatus to the AoA estimating apparatus. In addition, the incidence angle with respect to the signal from the target apparatus to the AoA estimating apparatus may be more accurately estimated.

Equation 4 may be determined according to the above descriptions,

$$\hat{\theta} = \underset{\theta \in [-180, 180]}{\arg \min} \left\{ \sum_{i=1}^{N} \left| \hat{a}_i - \overline{a}(\theta + \Delta\theta_i) \right|^2 \right\}$$

$\theta$ : Incident angle

N : # of measurement

$\overline{a}_i (\theta)$ steering vector

$\Delta\theta_i$ : i - th rotation angle

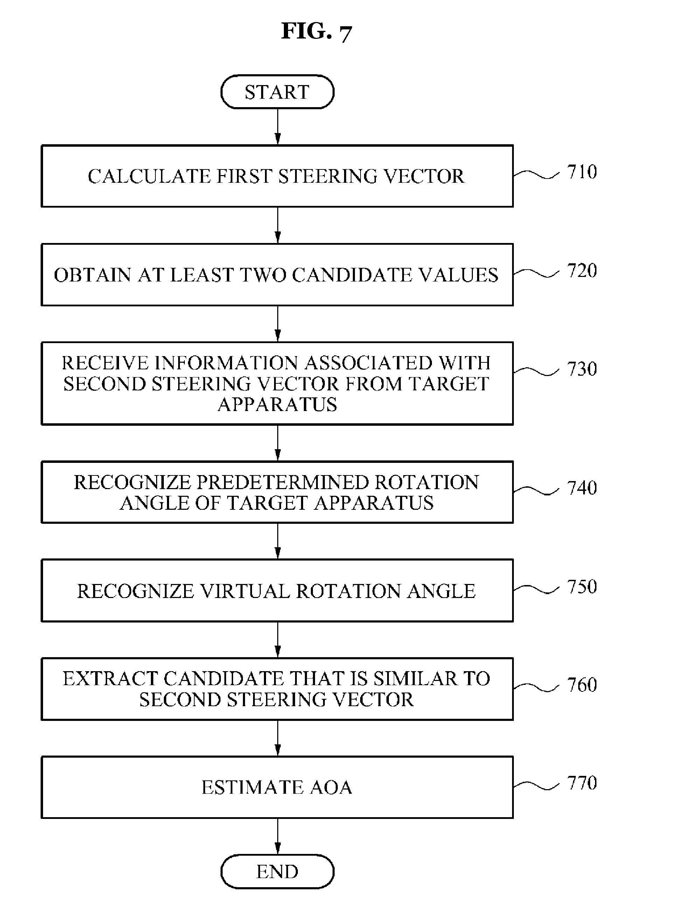

FIG. 7 illustrates another example of a method of an AoA estimating apparatus.

Referring to FIG. 7, the AoA estimating apparatus calculates a first steering vector indicating phase differences in antenna elements included in an array antenna with respect to a signal received from the target apparatus in operation 710.

The AoA estimating apparatus obtains at least two candidate values for an AoA based on the first steering vector in operation 720. In this example, the AoA of the signal received from the target apparatus may not be able to be determined based on only the first steering vector, due to an ambiguity problem.

If an angle between a direction of the AoA estimating apparatus and a direction of the target apparatus is a predetermined angle, the AoA estimating apparatus receives, from the target apparatus, information associated with a second steering vector from the AoA estimating apparatus to the target apparatus in operation 730.

The information associated with the second steering vector may include information associated with a rotation angle of the target apparatus, information associated with a beam pattern corresponding to the second steering vector, and the like.

The AoA estimating apparatus recognizes the rotation angle of the target apparatus based on the information associated with the second steering vector in operation 740. In this example, the rotation angle of the target apparatus may be an angle between the direction of the AoA estimating apparatus and the direction of the target apparatus.

The AoA estimating apparatus recognizes a virtual rotation angle of the AoA estimating apparatus, the virtual rotation angle corresponding to the rotation angle of the target apparatus, in operation 750. The AoA estimating apparatus may recognize the virtual rotation angle based on a duality.

The AoA estimating apparatus extracts a candidate vector that is similar to the real second steering vector from among candidate vectors for the second steering vector that are generated when the AoA estimating apparatus rotates at the virtual rotation angle in operation 760.

In this example, when two vectors are similar to each other, beam patterns corresponding to the two vectors are similar to each other.

The AoA estimating apparatus estimates the AoA using the candidate vector that is most similar to the second steering vector in operation 770.

The methods described above may be recorded, stored, or fixed in one or more non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described examples, or vice versa. In addition, a non-transitory computer-readable storage medium may be distributed among computer systems connected through a network and non-transitory computer-readable codes or program instructions may be stored and executed in a decentralized manner.

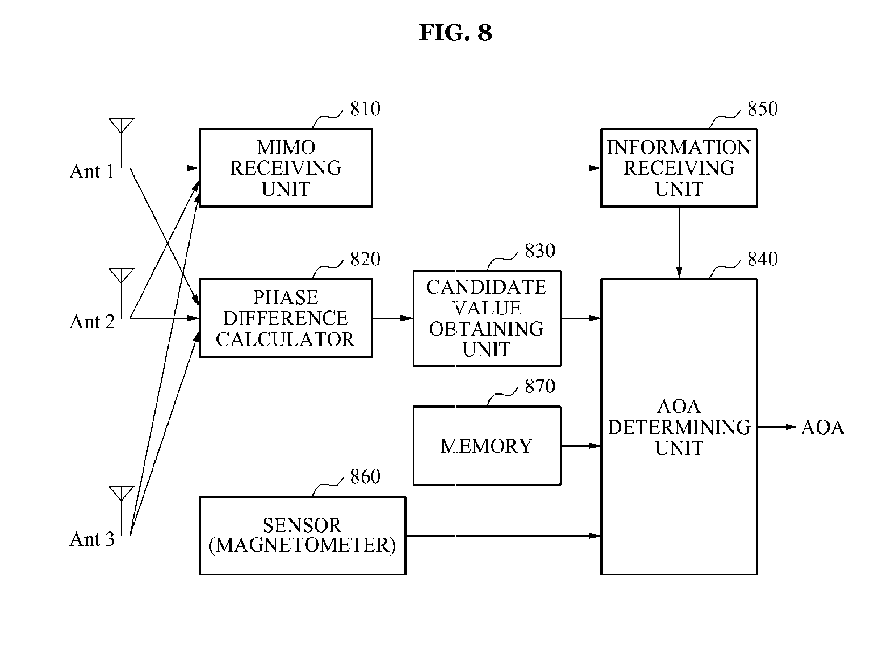

FIG. 8 illustrates an example of an AoA estimating apparatus.

Referring to FIG. 8, the AoA estimating apparatus may include a multiple input multiple output (MIMO) receiving unit 810, a phase difference calculator 820, a candidate value obtaining unit 830, an AoA determining unit 840, an information receiving unit 850, a sensor 860, and a memory 870.

The MIMO receiving unit 810 may combine signals received from antenna elements. The combined signal may be provided to the information receiving unit 850.

The phase difference calculator 820 may calculate phase differences in antenna elements included in an array antenna with respect to a received signal. A first steering vector may be determined based on the phase differences.

The candidate value obtaining unit 830 may obtain at least two candidate values with respect to an AoA of the received signal based on the first steering vector.

The phase difference calculator 820 may calculate phase differences to detect a second steering vector corresponding to a predetermined rotation angle of the AoA estimating apparatus.

The AoA determining unit 840 may determine the AoA according to one of the at least two candidate values, the one being selected based on the second steering vector and the predetermined rotation angle of the AoA estimating apparatus. In this example, the rotation angle of the AoA estimating apparatus may be measured by the sensor 860. As described further above, one example of the sensor 860 may be a magnetometer.

The memory 870 may store information regarding candidate vectors for the second steering vector, and the AoA determining unit 840 may determine the AoA based on information regarding one of the candidate vectors stored in the memory 870.

The information receiving unit 850 may recognize information provided by the target apparatus using the signals that are received from the antenna elements and combined. For example, if a direction from the AoA estimating apparatus to the target apparatus rotates at a second rotation angle, that is, when an angle between a direction of the AoA estimating apparatus and a direction of the target apparatus is the second rotation angle, the information receiving unit 850 may receive, from the target apparatus, information associated with a third steering vector from the AoA estimating apparatus to the target apparatus. In this example, the AoA determining unit 840 may determine the AoA based on one of the at least two candidate values, the one being selected based on the second rotation angle and the information associated with the third steering vector.

Examples described herein with reference to FIGS. 1 through 7 may be applicable to the AoA estimating apparatus of FIG. 8 and thus, detailed descriptions thereof will be omitted.

A number of example embodiments have been described above.

Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. An angle of arrival (AoA) estimating method of an AoA estimating apparatus, the method comprising:

    calculating a first steering vector with respect to a received signal, the first steering vector, the first steering vector indicating phase differences in antenna elements included in an array antenna;
    determining at least two candidate values with respect to an AoA of the received signal, based on the first steering vector;
    calculating a second steering vector corresponding to a predetermined rotation angle to which the AoA estimating apparatus rotates;
    selecting one of the at least two candidate values based, on the second steering vector and the predetermined rotation angle; and
    determining the AoA based on the selected candidate value.

2. The method of claim 1, wherein the determining of the AoA further comprises:

    determining the AoA based on a memory storing, in advance, information associated with candidate vectors for the second steering vector.

3. The method of claim 2, wherein the information associated with the candidate vectors for the second steering vector includes information corresponding to the predetermined rotation angle with respect to each of the at least two candidate values of the AoA.

4. The method of claim 1, 2 or 3 further comprising:

    measuring a rotation angle of the AoA estimating apparatus.

**5.** The method of claim 2, 3 or 4 wherein the determining of the AoA further comprises:

selecting a candidate vector from among the candidate vectors for the second steering vector, based on a comparison of the candidate vectors for the second steering vector to the second steering vector; and estimating the AoA based on the selected candidate vector.

**6.** The method of any of claims 1-4, wherein the array antenna is an omni-directional antenna.

**7.** The method of any of claims 1-6, wherein intervals among the antenna elements included in the array antenna are at least one-half of a wavelength.

**8.** An angle of arrival (AoA) estimating method of an AoA estimating apparatus, the method comprising:

calculating a first steering vector with respect to a signal received from a target apparatus, the first steering vector indicating phase differences in antenna elements included in an array antenna; determining at least two candidate values with respect to an AoA of the received signal, based on the first steering vector; receiving, from the target apparatus, information associated with a second steering vector when an angle between a direction of the target apparatus and a direction of the AoA estimating apparatus is a predetermined rotation angle; selecting one of the at least two candidate values, based on the predetermined rotation angle of the target apparatus and information associated with the second steering vector; and determining the AoA based on the selected candidate value.

**9.** The method of claim 8, wherein the determining of the AoA further comprises:

determining the AoA based on a duality between rotation of the target apparatus and rotation of the AoA estimating apparatus.

**10.** The method of claim 8 or 9, wherein the determining of the AoA comprises:

determining a virtual rotation angle of the AoA estimating apparatus, the virtual rotation angle corresponding to the predetermined rotation angle; selecting a candidate vector from among candidate vectors for the second steering vector, the second steering vector corresponding to the virtual rotation angle to which the AoA estimating apparatus virtually rotates; and estimating the AoA based on the selected candidate vector.

**11.** The method of claim 9 or 10, wherein the candidate vectors for the second steering vector are stored in a memory in advance.

**12.** A non-transitory computer readable recording medium storing a program to implement the method of claim 1.

**13.** An angle of arrival (AoA) estimating apparatus, the apparatus comprising:

a phase difference calculator to calculate a first steering vector from a target apparatus to the AoA estimating apparatus, to calculate phase differences in antenna elements included in an array antenna with respect to a received signal, and to calculate a second steering vector corresponding to a first rotation angle to which the AoA estimating apparatus rotates; a candidate value obtaining unit to determine at least two candidate values with respect to an AoA of the received signal, based on the first steering vector; and an AoA determining unit to select one of the at least two candidate values based on the second steering vector and the first rotation angle, and to determine the AoA based on the selected candidate value.

**14.** The apparatus of claim 13, further comprising:

a sensor to measure a rotation angle of the AoA estimating apparatus.

**15.** The apparatus of claim 13 or 14, further comprising:

an information receiving unit to receive, from the target apparatus, information associated with a third steering vector from the AoA estimating apparatus to the target apparatus, when an angle between a direction of the AoA estimating apparatus and a direction of the target apparatus is a second rotation angle,

wherein the AoA determining unit selects the one of the at least two candidate values further based on the second rotation angle and information associated with the third steering vector.

**FIG. 1**

## FIG. 2

$$\overline{a}(0°) = \overline{a}(90°) = \overline{a}(180°) = \overline{a}(270°)$$

# FIG. 3

# FIG. 4

410: ROTATION ANGLE=20°

θ=180°

420:

ROTATION ANGLE=20°

θ=270°

# FIG. 5

START

CALCULATE FIRST STEERING VECTOR — 510

OBTAIN AT LEAST TWO CANDIDATE VALUES — 520

MEASURE ROTATION ANGLE — 530

DETECT SECOND STEERING VECTOR — 540

EXTRACT CANDIDATE THAT IS MOST SIMILAR TO SECOND STEERING VECTOR — 550

ESTIMATE AOA — 560

END

# FIG. 6

# FIG. 7

```
        ┌─────────────┐
        │    START    │
        └─────────────┘
               │
               ▼
┌──────────────────────────────────────┐
│   CALCULATE FIRST STEERING VECTOR     │ ～ 710
└──────────────────────────────────────┘
               │
               ▼
┌──────────────────────────────────────┐
│   OBTAIN AT LEAST TWO CANDIDATE VALUES │ ～ 720
└──────────────────────────────────────┘
               │
               ▼
┌──────────────────────────────────────┐
│   RECEIVE INFORMATION ASSOCIATED WITH  │ ～ 730
│   SECOND STEERING VECTOR FROM TARGET   │
│              APPARATUS                 │
└──────────────────────────────────────┘
               │
               ▼
┌──────────────────────────────────────┐
│   RECOGNIZE PREDETERMINED ROTATION     │ ～ 740
│   ANGLE OF TARGET APPARATUS            │
└──────────────────────────────────────┘
               │
               ▼
┌──────────────────────────────────────┐
│   RECOGNIZE VIRTUAL ROTATION ANGLE     │ ～ 750
└──────────────────────────────────────┘
               │
               ▼
┌──────────────────────────────────────┐
│   EXTRACT CANDIDATE THAT IS SIMILAR TO │ ～ 760
│   SECOND STEERING VECTOR               │
└──────────────────────────────────────┘
               │
               ▼
┌──────────────────────────────────────┐
│            ESTIMATE AOA                │ ～ 770
└──────────────────────────────────────┘
               │
               ▼
        ┌─────────────┐
        │     END     │
        └─────────────┘
```

**FIG. 8**

EP 2 362 236 A1

**Europäisches Patentamt**
**European Patent Office**
**Office européen des brevets**

## EUROPEAN SEARCH REPORT

Application Number

EP 11 15 4687

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2005/062647 A1 (MARKS MAURY I [US]) 24 March 2005 (2005-03-24)<br>* abstract *<br>* paragraphs [0003], [0004], [0012] - [0014], [0051] *<br>----- | 1-7, 12-14<br>8-11,15 | INV.<br>G01S3/04<br>G01S3/48 |
| A | JP 2004 254001 A (ATR ADVANCED TELECOMM RES INST) 9 September 2004 (2004-09-09)<br>* abstract *<br>----- | 1,8,12, 13 | |
| A | DEBBAH M ET AL: "MIMO Channel Modeling and the Principle of Maximum Entropy", IEEE TRANSACTIONS ON INFORMATION THEORY, IEEE PRESS, USA,<br>vol. 51, no. 5, 1 May 2005 (2005-05-01), pages 1667-1690, XP011130913,<br>ISSN: 0018-9448, DOI:<br>DOI:10.1109/TIT.2005.846388<br>* page 1680, section IV-E-3) *<br>----- | 8-11,15 | |
| A | ZEIRA A ET AL: "Direction estimation using time-varying arrays",<br>SIGNALS, SYSTEMS AND COMPUTERS, 1993. 1993 CONFERENCE RECORD OF THE TW ENTY-SEVENTH ASILOMAR CONFERENCE ON PACIFIC GROVE, CA, USA 1-3 NOV. 1993, LOS ALAMITOS, CA, USA,IEEE COMPUT. SOC,<br>1 November 1993 (1993-11-01), pages 1116-1120, XP010096228,<br>DOI: DOI:10.1109/ACSSC.1993.342397<br>ISBN: 978-0-8186-4120-6<br>* pages 1116, 1119 *<br>----- | 1,8,12, 13 | TECHNICAL FIELDS SEARCHED (IPC)<br><br>G01S |

The present search report has been drawn up for all claims

| Place of search | Date of completion of the search | Examiner |
|---|---|---|
| The Hague | 17 June 2011 | Roost, Joseph |

EPO FORM 1503 03.82 (P04C01)

**ANNEX TO THE EUROPEAN SEARCH REPORT
ON EUROPEAN PATENT APPLICATION NO.**

EP 11 15 4687

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2011

| Patent document cited in search report | Publication date | Patent family member(s) | Publication date |
|---|---|---|---|
| US 2005062647 A1 | 24-03-2005 | CA 2539578 A1<br>EP 1716432 A2<br>WO 2005045459 A2 | 19-05-2005<br>02-11-2006<br>19-05-2005 |
| JP 2004254001 A | 09-09-2004 | JP 3875198 B2 | 31-01-2007 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100014550